# EUROPÄISCHE PATENTSCHRIFT

(11) **EP 2 537 884 B1**
(45) Veröffentlichungstag und Bekanntmachung des Hinweises auf die Patenterteilung: **07.09.2022**
(21) Anmeldenummer: 12004648.7
(22) Anmeldetag: 20.06.2012
(51) Int. Cl.: C08J 11/04, C08L 101/10

(54) **Verfahren zur Herstellung eines aufbereiteten Kunststoffmaterials**
Method for producing a processed plastic material
Procédé de fabrication d'un matériau en plastique préparé

(30) Priorität: 21.06.2011 DE 102011105037
(43) Veröffentlichungstag der Anmeldung: 26.12.2012
(73) Patentinhaber: Interzero Circular Solutions Germany GmbH, 51149 Köln (DE)
(72) Erfinder: Ulcnik-Krump, Manica, Dr., 2000 Maribor (SI)
(74) Vertreter: Laufhütte, Dieter

(56) Entgegenhaltungen:
- CN-A- 101 798 423
- US-A1- 2004 235 970

## Beschreibung

### Verfahren zur Herstellung eines aufbereiteten Kunststoffmaterials

Die Erfindung betrifft ein Verfahren zur Herstellung eines aufbereiteten Kunststoffmaterials aus gebrauchtem Kunststoffmaterial.

Gattungsgemäße Aufbereitungsverfahren sind aus dem Stand der Technik bekannt und befassen sich mit einem Teilaspekt von Recyclingprozessen von Kunststoffabfällen.

Industrielle Kunststoffabfälle und häusliche Kunststoffabfälle werden durch die Etablierung der Abfalltrennung bereits getrennt von anderen Abfallbestandteilen gesammelt. Die gesammelten Kunststoffabfälle können im Eingang des Recyclingprozeses gereinigt, zerkleinert, und mit Hilfe verschiedenster Trennverfahren mit hinreichendem Ergebnis nach dem zugrundeliegenden Kunststofftyp sortiert werden. Typischerweise erfolgt zudem eine Extrusion bei gleichzeitiger Schmelzfiltration, um beispielsweise Pellets aus recyceltem Kunststoff zu gewinnen, die einer weiteren Verwendung zugeführt werden. Die EP 1 494 843 B1 offenbart ein derartiges Verfahren zur Rückgewinnung von gebrauchtem Kunststoffmaterial aus Haushalts- und Verpackungsabfällen. US 2004/235970 A1 offenbart ein Verfahren zum Recyclen von Abfällen enthaltend 70 Gew. % Plastik. CN 101 798 423 A offenbart die Verwendung eines Plastikabfalls, welcher 5-100 % wiedergewonnenes PP enthält und dieses mit 0-1 % eines Hitzestabilisierungsmittels vermischt und nennt dazu auch sterisch gehinderte Phenole und Amine.

Für eine Vielzahl von Einsatzzwecken werden jedoch Kunststoffmaterialien mit eng definierten physikalischen Eigenschaften wie beispielsweise einer bestimmten Schmelzflussrate oder einer bestimmten Zugfestigkeit benötigt, die durch die recycelten Kunststoffabfälle regelmäßig nicht erfüllt werden können. Der Grund dafür ist erkennbar unter anderem die Vermischung einer Vielzahl von Kunststoffen verschiedener Hersteller, verschiedener Güte, verschiedener Molekulargewichtsverteilung, mit unterschiedlichen Zusatzstoffen, unterschiedlichen Alters, und unterschiedlicher thermischer Belastung und Strahlenbelastung in vorhergehenden Lebenszyklen. So bleibt die Anwendung in hochwertigen Kunststoffprodukten oftmals Neumaterial vorbehalten, was vom Standpunkt des Umweltschutzes und auch aus ökonomischer Sicht, insbesondere unter dem Gesichtspunkt von steigenden Ölpreisen verbesserungsbedürftig ist.

In der EP 1 495 074 B1 ist die Idee offenbart, der Schmelze des gebrauchten Polymermaterials Chemikalien zuzusetzen, um dessen Güte allgemein zu verbessern. Jedoch fehlt es bisher im Stand der Technik an konkreten Ansätzen, um eine Anwendung von recyceltem Kunststoffmaterial in hochwertigen Kunststoffprodukten zu ermöglichen.

Ziel der vorliegenden Erfindung ist es, ein Verfahren bereitzustellen mit dem aus einem gebrauchten Kunststoffmaterial ein aufbereitetes Kunststoffmaterial gewonnen werden kann, das sich für den Einsatz in höherwertigen Kunststoffprodukten und/oder Spezialanwendungen eignet.

Dieses Ziel wird mit einem Verfahren gemäß Anspruch 1 erreicht. Vorteilhafte Ausgestaltungen ergeben sich aus den Unteransprüchen.

Die Erfinder der vorliegenden Patentanmeldung haben Ihren nachfolgend beschriebenen Erkenntnissen unter anderem den Gedanken zu Grunde gelegt, dass gebrauchtes Kunststoffmaterial wohl nicht so aufbereitet werden kann, dass das aufbereitete Kunststoffmaterial in all seinen physikalischen Eigenschaften einem Neumaterial angeglichen werden kann.

Vielmehr sollen maßgeschneidert auf eine bestimmte Anwendung ganz spezielle physikalische Eigenschaften verbessert werden. Die Verbesserung anderer physikalischer Eigenschaften, die für die betreffende Anwendung weniger entscheidend sind, kann zurückgestellt werden. Teilweise können hier sogar gewisse Einbußen in Kauf genommen werden.

So ist erfindungsgemäß ein Verfahren zur Herstellung eines aufbereiteten Kunststoffmaterials aus einem gebrauchtem Kunststoffmaterial vorgesehen, wobei das aufbereitete Kunststoffmaterial bestimmte physikalische Zieleigenschaften aufweist, wodurch es sich für eine bestimmte Anwendung beziehungsweise zur Verwendung in einem bestimmten Endprodukt eignet. Das erfindungsgemäße Verfahren weist in Anspruch 1 definierten Schritte auf.

Durch das erfindungsgemäße Verfahren ist es also möglich, ausgehend von einer den Aufbereitungsschritten vorangehenden Definition der gewünschten Produkteigenschaften ein aufbereitetes Kunststoffmaterial bereitzustellen, das auf bestimmte Anwendungen maßgeschneiderte Eigenschaften aufweist. Das Verfahren beeinflusst bestimmte physikalische Eigenschaften eines gebrauchten Kunststoffmaterials durch eine maßgeschneiderte Aufbereitung, sodass auch für hochwertige Einsatzzwecke geeignete aufbereitete Kunststoffmaterialien gewonnen werden.

In einer Ausführungsform werden nicht alle physikalischen Ausgangseigenschaften des gebrauchten Kunststoffmaterials verändert beziehungsweise optimiert, was zum einen typischerweise nicht möglich ist, und zum anderen durch die vorgelagerte Auswahl und Prioritätssetzung auch nicht notwendig ist.

In einer Ausführungsform ergeben sich die physikalischen Eigenschaften des aufbereiteten Kunststoffmaterials, neben der Zusammensetzung der Ausgangsmaterialien, wenigstens teilweise aus der wohldefinierten Aufbereitung, das heißt durch den Zusatz einer bestimmten Art und Menge wenigstens einer chemischen Verbindung und/oder wenigstens eines Füllmaterials.

In einer Ausführungsform ist das Verfahren für den großtechnischen Einsatz geeignet. Dies setzt beispielsweise eine allgemeine Verfügbarkeit kostengünstiger und geeigneter Ausgangsstoffe, eine gute Automatisierbarkeit und eine kostenbedachte Auswahl der eingesetzten Zusatzstoffe voraus. Der produktbasierte Ansatz funktioniert in dieser Ausführungsform sehr gut, da die physikalischen und chemischen Ausgangseigenschaften des gebrauchten Kunststoffmaterials beziehungsweise Ausgangsstoffes bei einer Verwendung großer Mengen im Zuge einer großtechnischen Prozessführung typischerweise annähernd konstant sind.

In einer Ausführungsform stammt das gebrauchte Kunststoffmaterial aus Haushalts- und/oder Verpackungsabfällen, beispielsweise aus Material, das aus dem sogenannten "Gelben Sack" stammt. Dieser sogenannte Post-Consumer Waste setzt sich z.B. aus etwa 70 Gew.-% bis 100 Gew.-% Lebensmittelverpackungen und 0 Gew.-% bis etwa 30 Gew.-% Non-Food-Verpackungen zusammen. Alternativ oder zusätzlich kann auch industrieller Kunststoffabfall (Post-Industrial Waste) dem erfindungsgemäßen Verfahren zu Grunde gelegt werden.

In einer Ausführungsform weist das gebrauchte Kunststoffmaterial einen hohen Anteil an Polyolefinen auf, beispielsweise über etwa 80 Gew.-%, über etwa 90 Gew.-%, oder gar über etwa 95 Gew.-%. Typische Anteile der Polyolefinfraktion am gebrauchten und/oder aufbereiteten Kunststoffmaterial betragen zwischen etwa 90 Gew.-% und etwa 99,8 Gew.-%, oder zwischen etwa 95 Gew.-% und etwa 99 Gew.-%

In einer Ausführungsform weist das gebrauchte Kunststoffmaterial wenigstens etwa 50 Gew.-%, vorzugsweise wenigstens etwa 80 Gew.-% und weiter vorzugsweise wenigstens etwa 95 Gew.-% Polypropylen auf. Der Anteil kann jedoch auch nach oben beschränkt sein, beispielsweise durch die Leistungsfähigkeit der vorgelagerten Reinigungsschritte, und in einer Ausführungsform weniger als etwa 98 Gew.-% betragen.

In einer Ausführungsform weist das gebrauchte Kunststoffmaterial zwischen etwa 0,02 Gew.-% und etwa 5 Gew.-%, vorzugsweise zwischen etwa 0,1 Gew.-% und etwa 3 Gew.-% Polyethylen auf. Dabei kann es sich um HDPE, LDPE, LLDPE oder einer Mischung daraus handeln.

In einer Ausführungsform weist das gebrauchte Kunststoffmaterial ein Dichte von zwischen etwa 0,9 g/cm³ und etwa 1,2 g/cm³ und vorzugsweise von zwischen etwa 0,95 g/cm³ und etwa 1,1 g/cm³ auf.

Mit diesen Ausgangsstoffen können unter Verwendung des erfindungsgemäßen produktbasierten Ansatzes gute Ergebnisse erzielt werden.

Die eben im Zusammenhang mit dem gebrauchten Kunststoffmaterial beschriebenen Fraktionszusammensetztungen beziehungsweise Dichten können für das aufbereitete Kunststoffmaterial entsprechend gelten.

In einer Ausführungsform umfasst das gebrauchte Kunststoffmaterial mehrere Fraktionen, beispielsweise Hauptbestandteile und Nebenbestandteile die sich durch Herkunft, Güte, Molekulargewichtsverteilung, Zusatzstoffe, Alter, Alterungserscheindung, Homogenität, Taktizität, Vernetzungsgrad und dergleichen unterscheiden.

In einer Ausführungsform ist das bestimmte Endprodukt, auf Grundlage dessen die notwendigen physikalischen Zieleigenschaften des aufbereiteten Kunststoffmaterials festgelegt werden, ein extrudierter oder spritzgegossener Kunststoffartikel. So umfasst die Erfindung auch die Verwendung eines erfindungsgemäßen Verfahrens zur Herstellung eines extrudierten oder spritzgegossenen Kunststoffartikels.

In einer Ausführungsform ist das bestimmte Endprodukt ein dünnwandiger und gegebenenfalls spritzgegossener Kunststoffartikel wie beispielsweise ein Eimer, eine Wanne oder ein Container. In einer Ausführungsform ist das Endprodukt eine Transportpalette. In einer Ausführungsform ist das Endprodukt eine Kiste, beispielsweise eine Getränkekiste mit Fächern zur Aufnahme von Flaschen.

In einer Ausführungsform umfasst die Bestimmung mindestens einer chemischen Eigenschaft aus Schritt (a) die Bestimmung von Art beziehungsweise chemischen Eigenschaften wenigstens eines polymeren Bestandteils und/oder dessen Gehalt in gebrauchtem Kunststoffmaterial. Darunter kann insbesondere die Bestimmung des Mischverhältnisses und der Eigenschaften einer oder mehrerer Polymerfraktionen fallen, die sich wie zuvor beschrieben unterscheiden können, wie beispielsweise die Größe der PP-Fraktion, der PE-Fraktion usw.

In einer Ausführungsform umfasst die Bestimmung mindestens einer chemischen Eigenschaft aus Schritt (a) die Bestimmung chemischer Veränderungen wenigstens eines polymeren Bestandteils. Dies umfasst beispielsweise die Bestimmung des Grades des oxidativen Abbaus durch Photooxidation oder thermische Oxidation, Erkennen von Kettenbrüchen, Identifizierung der Art und Menge neuer funktioneller Gruppen an den Polymerketten und dergleichen. Diese chemischen Veränderungen können u.a. Kristallinität, Glastemperatur und verschiedene mechanische Eigenschaften des Ausgangsstoffes verändern, und so die Strategie der Aufbereitung gemäß Schritt (d) beeinflussen.

In einer Ausführungsform umfasst die Bestimmung mindestens einer chemischen Eigenschaft aus Schritt (a) die Bestimmung von Art und/oder chemischen Eigenschaften wenigstens eines niedermolekularen Bestandteils des gebrauchten Kunststoffmaterials und/oder dessen Gehalt im gebrauchten Kunststoffmaterial. Solche niedermolekularen Bestandteile umfassen beispielsweise unreagierte Monomere oder teilreagierte Oligomere, Bruchstücke von Ketten aus Abbaureaktionen, Lösungsmittel, Radikalstarter, Katalysatoren, Antioxidantien, Stabilisierungsmittel, Plastifizierungsmittel, Flammschutzmittel, und ganz allgemein Verunreinigungen, Abbauprodukte und Zusatzstoffe, welche im gebrauchten Kunststoffmaterialien vorhanden sind.

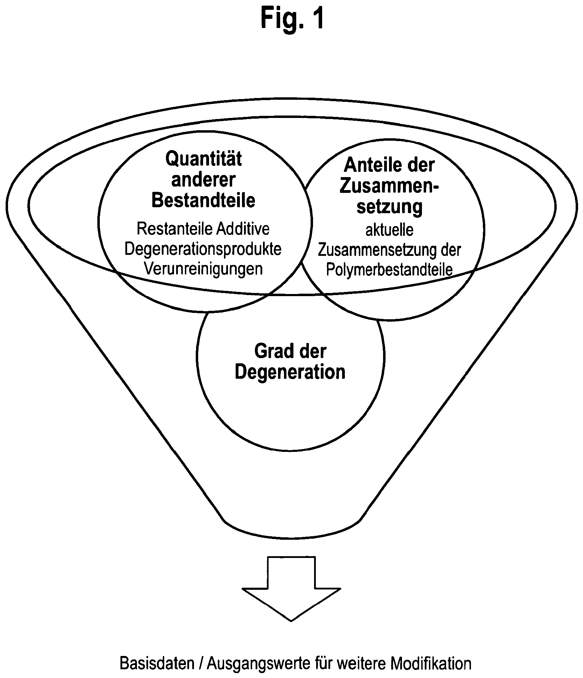

Figur 1 stellt die eben beschriebenen, in Schritt (a) bestimmbaren chemischen Eigenschaften des Ausgangsstoffes graphisch dar.

In dieser Ausführungsform werden in Schritt (a) eine oder mehrere der oben genannten chemischen Eigenschaften des Ausgangsmaterials durch die chemische und/oder spektroskopische Analyse bestimmt. Denkbare Anslyseverfahren umfassen z.B. die thermische Analyse wie die Dynamische Differenzkalorimetrie (z.B. zur Bestimmung polymerischer Verunreinigungen), die Vibrationsspektroskopie (z.B. zur Bestimmung des Oxidationsgrades), und die Chromatographie wie GC-MS (z.B. nachfolgend einer mikrowellenassistierten Extraktion zur Bestimmung von niedermolekularen Verunreinigungen).

Die in Schritt (a) gewonnenen Informationen über die chemische Zusammensetzung werden benötigt, um eine chemische Aufbereitungsstartegie festzulegen, um gezielt einzelne physikalische Eigenschaften des gebrauchten Kunststoffmaterials in einem bestimmten Maße verändern zu können. Die bloße Bestimmung makroskopischer physikalischer Eigenschaften hingegen ermöglicht typischerweise keine hinreichende Vorhersage über die Auswirkungen einer bestimmten chemischen Aufbereitung auf die Materialeigenschaften des aufbereiteten Kunststoffmaterials.

In einer Ausführungsform ist eine in Schritt (b) bestimmte und gegebenenfalls in Schritt (c) festgelegte physikalische Eigenschaft eine rheologische Eigenschaft. In einer Ausführungsform handelt es sich bei dieser rheologischen Eigenschaft um die Schmelzflussrate. Jedoch ist auch die Bestimmung und Festlegung anderer rheologischer Eigenschaften von der Erfindung umfasst.

Das im erfindungsgemäßen Verfahren eingesetzte, gebrauchte Kunststoffmaterial kann eine Schmelzflussrate von zwischen etwa 0,8 und etwa 25 g/10min, von zwischen etwa 6 und etwa 16 g/10min, oder von zwischen etwa 9 und etwa 14 g/10min (z.B. bei der Verwendung von Post-Consumer Waste mit einem hohen Polyolefinanteil) aufweisen. Da die Schmelzflussrate Einfluss auf die weitere Verarbeitbarkeit des aufbereiteten Kunststoffmaterials (Extrusion, Spritzguss, etc.) hat, sind gewünschte Zielwerte je nach Anwendung unterschiedlich. Eine gewünschter Zielwert für die Schmelzflussrate des aufbereiteten Kunststoffmaterials kann zum einen etwa im selben Bereich wie der Ausgangswert des gebrauchten Kunststoffmaterials liegen, beispielsweise zwischen etwa 8 und etwa 12 g/10min. Mit anderen Worten bedarf es für manche Anwendungen keiner Beeinflussung (z.B. Erhöhung) der Schmelzflussrate. Eine moderate Schmelzflussrate kann für gewisse Einsatzzwecke ausreichend sein, beispielsweise bei der Herstellung kompakter bzw. dickwandiger Kunststoffartikel wie Kisten oder Paletten. In anderen Anwendungen, beispielsweise zur Herstellung von dünnwandigen Artikeln, insbesondere im Spritzgußverfahren, sollte die Durchlaufzeit im Spritzgusswerkzeug niedrig sein. So kann in einer Ausführungsform die Zielgröße für die Schmelzflussrate zwischen etwa 20 und etwa 70 g/10min, insbesondere zwischen etwa 30 und etwa 36 g/10min liegen, mit einer Toleranz von zwischen etwa 5 bis 15%. Die oben angegebenen Werte für die Schmelzflussrate beziehen sich auf Werte, die nach ISO 1133 bei 230°C und 2,16 kg Belastung zu messen sind.

In einer Ausführungsform ist eine in Schritt (b) bestimmte und/oder in Schritt (c) festgelegte und gegebenenfalls in Schritt (d) veränderte physikalische Eigenschaft eine mechanische Eigenschaft. Bevorzugte derartige mechanische Eigenschaften umfassen beispielsweise die Zugfestigkeit, das Biegemodul oder die Schlagzähigkeit.

Das im erfindungsgemäßen Verfahren eingesetzte, gebrauchte Kunststoffmaterial kann beispielsweise eine Zugfestigkeit von zwischen etwa 600 und etwa 2000 MPa oder von zwischen etwa 800 und etwa 1000 MPa aufweisen. Zielgrößen für die Zugfestigkeit sind anwendungsabhängig und umfassen eine Zugfestigkeit von wenigstens etwa 1250 MPa (z.B. für dünnwandige Artikel wie Eimer) oder wenigstens etwa 1400 MPa (z.B. für Kisten). In anderen Anwendungen (z.B. Paletten) kann eine Zugfestigkeit von unter etwa 1000 MPa in Kauf genommen oder sogar gewünscht sein. Eine Verbesserung der Zugfestigkeit zu Gunsten einer Verbesserung anderer physikalischer Eigenschaften zurückgestellt werden. Die oben angegebenen Werte für die Zugfestigkeit beziehen sich auf Werte, die nach ISO 527 zu messen sind.

Des Weiteren kann das im erfindungsgemäßen Verfahren eingesetzte, gebrauchte Kunststoffmaterial ein Biegemodul von zwischen etwa 800 und etwa 2200 Mpa, zwischen etwa 850 und etwa 1250 Mpa, oder von zwischen etwa 950 und etwa 1150 MPa aufweisen. Zielgrößen für die Zugfestigkeit sind anwendungsabhängig und umfassen eine Zugfestigkeit von wenigstens etwa 1350 MPa (z.B. für dünnwandige Artikel wie Eimer) oder wenigstens etwa 1400 MPa (z.B. für Kisten). Andere Endprodukte (z.B. Paletten) erlauben dagegen ein geringeres Biegemodul des aufbereiteten Kunststoffmaterials von beispielsweise maximal ewa 1100 MPa. Die oben angegebenen Werte für das Biegemodul beziehen sich auf Werte, die nach ISO 178 zu messen sind.

Ferner kann das im erfindungsgemäßen Verfahren eingesetzte, gebrauchte Kunststoffmaterial eine Schlagzähigkeit von beispielsweise zwischen etwa 3 und etwa 9 kJ/m² oder von zwischen etwa 5 und etwa 7 kJ/m² nach IZOD bei 23°C aufweisen. Wiederum sind je nach Endprodukt, in dem das aufbereitete Kunststoffmaterial zum Einsatz kommt, gewisse Mindestanforderungen an die Schlagzähigkeit gestellt. Bei Artikeln wie Kübeln oder Kisten können diese Mindestanforderungen beispielsweise bei etwa 3 kJ/m² oder etwa 6,5 kJ/m² nach IZOD bei 23°C liegen. Bei einer Palette und anderen Artikeln, bei denen ein grober Umgang zu erwarten ist, können höhere Anforderungen an die Schlagzähigkeit gestellt sein, insbesondere auch bei tiefen Temperaturen. So kann eine Schlagzähigkeit von wenigstens etwa 9 kJ/m² nach IZOD bei 23°C gewünscht sein oder auch wenigstens etwa 2,5 kJ/m² nach IZOD bei -30°C. Die oben referenzierten Werte der Schlagfähigkeit nach IZOD beziehen sich auf Werte, die nach dem Standard ISO 180/1a zu messen sind.

Weitere geeignete und einer Festlegung im Sinne des erfindungsgemäßen Verfahrens zugängliche Eigenschaften umfassen beispielsweise die Zugspannung. Diese kann in typischen Ausgangsmaterialien beispielsweise zwischen etwa 19 und etwa 33 MPa oder zwischen etwa 21 und etwa 31 MPa (Fließgrenze oder Max) bei 50 mm/min liegen.

In einer Ausführungsform ist eine in Schritt (b) bestimmte und/oder in Schritt (c) festgelegte und gegebenenfalls in Schritt (d) veränderte physikalische Eigenschaft eine thermische Eigenschaft. Eine geeignete thermische Eigenschaft, die einer maßgeschneiderten und zielorientierten Festlegung durch das erfindungsgemäße Verfahren im aufbereiteten Kunststoffmaterial zugänglich ist, ist die Wärmeformbeständigkeit. Typische Werte für Wärmeformbeständigkeiten eingesetzter Ausgangsmaterialien liegen bei zwischen etwa 45 und etwa 55°C nach ISO 72-2 bei 1,8 MPa.

Das erfindungsgemäße Verfahren umfasst in einer Ausführungsform den Schritt des Abgleichens wenigstens einer makroskopischen physikalischen Eigenschaft, vorzugsweise einer der voranstehend genannten makroskopischen physikalischen Eigenschaften mit einer gewünschten, entsprechenden Zieleigenschaft. Dabei können je nach Anwendung bestimmte Zieleigenschaften herausgegriffen werden, die für die Herstellung bestimmter Endprodukte in verfahrenstechnischer (rheologische Eigenschaften) oder anwendungstechnischer (mechanische Eigenschaften) Hinsicht besonders wichtig sind. So können beispielsweise mehrere Ausgangseigenschaften bestimmt werden, jedoch nur eine oder mehrere, jedenfalls eine Untermenge der bestimmten Ausgangseigenschaften als zu bestimmende Zieleigenschaften herausgegriffen werden, und im Verlauf eines erfindungsgemäßen Verfahrens maßgeschneidert verändert werden. Nach der Bestimmung mehrerer Ausgangseigenschaften kann beispielsweise auch die Eignung eines bestimmten Ausgangsmaterials für einen Einsatzbereich bewertet werden, sodass möglichst wenige Ausgangseigenschaften zum Erlangen eines aufbereiteten Kunststoffmaterials mit einem Satz an gewünschten, physikalischen Eigenschaften verändert werden müssen.

In einer Ausführungsform umfasst die Aufbereitung aus Schritt (d) die Zugabe wenigstens eines Zusatzstoffes in Form einer chemischen Verbindung und/oder wenigstes eines Füllmaterials gemeinsam mit beziehungsweise aufgenommen in einem Trägermaterial. Das Trägermaterial ist vorzugsweise Kunststoff wie beispielsweise Polyethylen oder insbesondere Polypropylen. Man spricht von einem PE/PP Carrier Granulat. Dabei kann vorgesehen sein, dass der oder die Zusatzstoffe in hoher Konzentration von beispielsweise mit mehr als etwa 50 oder etwa 60 Gew.-% in einem Kunststoffträger gelöst, dispergiert oder eingeschlossen sind. Mögliche Formen von Kuststoffträgern umfassen Pellets, Körner und dergleichen. Die Kunststoffträger können in das gebrauchte Kunststoffmaterial im geschmolzenen Zustand eingemischt und/oder compoundiert werden.

Die nachstehend angegebenen Zugabemengen in Gew.-% können sich auf die chemische Verbindung und/oder das Füllmaterial an sich, oder die chemische Verbindung und/oder das Füllmaterial inklusive einem Trägermaterial beziehen.

In einer Ausführungsform umfasst die Aufbereitung aus Schritt (b) die Zugabe wenigstens eines Stabilisierungsmittels. Ein Stabilisierungsmittel kann zugesetzt werden, um einen thermischen oder mechanischen Abbau während der Aufbereitung zu verhindern und/oder die physikalischen Eigenschaften des aufbereiteten Kunststoffmaterials über nachgelagerte Bearbeitungsschritte und den weiteren Verwendungszyklus hinweg konstant zu halten. Rheologische, mechanische, oder thermische Eigenschaften werden durch die Zugabe eines Stabilisierungsmittels typischerweise nicht oder kaum verändert.

In einer Ausführungsform werden Stabilisierungsmittel in einer Menge von zwischen etwa 0,1 und etwa 2 Gew.-%, vorzugsweise von zwischen etwa 0,05 und etwa 1 Gew.-%, und weiter vorzugsweise von zwischen etwa 0,1 und etwa 0,5 Gew.-% gemessen an der Gesamtmasse des eingesetzten, gebrauchten Kunststoffmaterials zugegeben.

in einer Ausführungsform werden als Stabilisierungsmittel Antioxidantien, welche Peroxide neutralisieren und Hydroperoxide zersetzen können, und/oder Lichtstabilisatoren eingesetzt.

In einer Ausführungsform werden als Stabilisierungsmittel sterisch gehinderte Phenole und/oder Amine verwendet. Beispiele umfassen Copolymere von Bicarbonsäuren und Aminoalkoholen. Der Polymerisierungsgrad dieser Copolymere kann beispielsweise so groß sein, dass zwischen 5 und 50, und vorzugsweise zwischen 10 und 20 Einheiten beider Monomere in dem Stabilisierungsmittel vorhanden sind. Geeignete Dicarbonsäuren für die Verwendung in einem derartigen Polymer haben beispielsweise die Formel HOOC-R^{A}-COOH, wobei R^{A} ein C₁ bis C₁₀, vorzugsweise ein C₁ bis C₄ lineares oder verzweigtes Alkyl ist, das gegebenenfalls ungesättigte Stellen und/oder Substituenten ausgewählt aus der Gruppe der Halogene, Hydroxide, Amine oder dergleichen aufweist. Geeignete Aminoalkohole zur Verwendung in einem derartigen Copolymer umfassen beispielsweise sekundäre oder vorzugsweise tertiäre Amine mit wenigstns zwei Alkanolsubstituenten. Diese können der Formel NR¹R²R³ entsprechen, wobei R¹ H oder ein C₁ bis C₁₀, vorzugszweise C₂ bis C₆ lineares oder verzweigtes Alkyl ist, das gegebenenfalls ungesättigte Stellen oder Substituenten ausgewählt aus der Gruppe Halogene, Hydroxide, Amine oder dergleichen aufweist, und wobei R² und R³ individuell ein C₁ bis C₁₀, vorzugsweise C₂ bis C₆ lineares oder verzweigtes Alkyl ist, das gegebenenfalls ungesättigte Stellen und das wenigstens eine Hydroxylgruppe aufweist. R₁ und R₂ können gemeinsam mit dem Stickstoffatom einen fünf- oder sechsgliedrigen Ring bilden, der wenigstens eine Hydroxy-Gruppe aufweist. Ein insbesondere geeignetes Copolymer kann mit der Formel 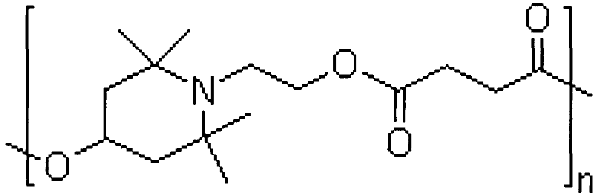 dargestellt werden, wobei n 5 bis 50 und vorzugsweise 10 bis 20 ist.

Auch der Einsatz kombinierter Präparate, beispielsweise innerhalb eines Kunststoffträgers ist denkbar.

In einer Ausführungsform umfasst die Aufbereitung aus Schritt (d) die Zugabe wenigstens einer Substanz mit wenigstens einer reaktiven Gruppe. Durch derartige reaktive Zusatzstoffe können vorhandene Polymerketten in einer vorzugsweise radikalischen beta-scission Reaktion gespalten werden. So kann eine Veränderung der Verteilung der Molekulargewichte erreicht werden, insbesondere eine engere Molekulargewichtsverteilung und/oder ein kleineres durchschnittliches Molekulargewicht. Das Molekulargewicht steht wiederum über die Viskosität der Schmelze mit den rheologischen Eigenschaften, beispielsweise der Schmelflussrate in Zusammenhang. Daher werden Substanzen mit wenistens einer reaktiven chemischen Gruppe insbesondere dann zugesetzt, wenn eine Veränderung der rheologischen Eigenschaften gewünscht ist, beispielsweise eine Erhöhung der Schmelzflussrate.

In einer Ausführungsform werden Substanzen mit wenigstens einer reaktiven Gruppe in einer vergleichsweise geringen Menge von zwischen etwa 0,01 und etwa 0,5 Gew.-%, vorzugsweise zwischen etwa 0,01 und etwa 0,2 Gew.-% gemessen an der Gesamtmasse des eingesetzten, gebrauchten Kunststoffmaterials zugegeben, um die Stabilität der Eigenschaften des aufbereiteten Kunststoffmaterials nicht zu beeinträchtigen.

In einer Ausführungsform umfassen geeignete Substanzen mit wenigstens einer reaktiven Gruppe vorzugsweise thermische Radikalstarter wie organische Azoverbindungen, organische Halogenverbindungen, organische Peroxide oder organische Ozonide. Bevorzugt sind organische Peroxide. Es können auch Radikalstarter mit zwei vorzugsweise thermisch homolytisch spaltbaren Bindungen aufweisen. Geeignete Peroxide fallen beispielsweise unter die Definition der Formel A(CR₂-O-O-CR₃)ₙ, wobei A ein monovalentes, divalentes oder polyvalentes, lineares oder verzweigtes, gesättigtes oder ungesättigtes C₁ bis C₂₀, vorzugsweise C₂ bis C₁₀ Alkyl, C₆ bis C₂₀ Aryl oder Alkaryl ist, wobei n 1 bis 5 ist, und wobei R ein C₁ bis C₁₀, vorzugsweise ein C₁ bis C₄ lineares oder verzweigtes Alkyl, wie beispielsweise Methyl oder Ethyl ist. In einer Ausführungsform kann der Wert für n 1 betragen. In einer anderen Ausführungsform kann der Wert für n 2 betragen, was einem Diperoxid entsprechen würde. Ein Beispiel für ein geeignetes Peroxid kann durch die folgende Formel dargestellt werden:

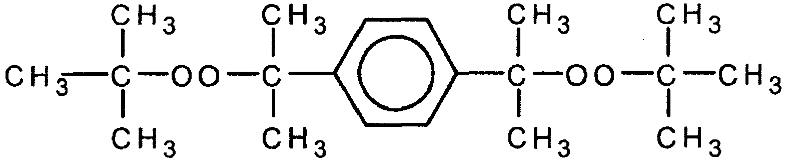

In einer Ausführungsform umfasst die Aufbereitung aus Schritt (d) die Zugabe wenigstens eines Füllstoffes. In dem gebrauchten Kunststoffmaterial kann die Molekülstruktur durch Umwelteinflüsse in vorangegangenen Verwendungszyklen so beeinflusst worden sein, dass sich mechanische Eigenschaften der Stoffe verändern. Diese Veränderungen müssen nicht alle mechanischen Eigenschaften in gleichem Maße betreffen. Der Zusatz von Füllstoffen kann Einfluss auf mechanische Eigenschaften des aufbereiteten Kunststoffmaterials, wie beispielsweise die Zugfestigkeit, das Biegemodul, die Schlagzähigkeit, oder die Zugspannung haben. Durch die gezielte Zugabe von Füllstoffen können einzelne oder mehrere Eigenschaften auf einen bestimmten Wert eingestellt werden, welcher für eine Verwendung des aufbereiteten Kunststoffmaterials in einem bestimmten Endprodukt vorauszusetzen ist.

In einer Ausführungsform umfassen geeignete Füllstoffe organische oder vorzugsweise anorganische Füllstoffe, wie beispielsweise fein verteilte Partikel (Pulver, Granulate etc.) oder Fasern. Geeignete Fasern umfassen je nach Aufgabenstellung Kurzfasern, Langfasern oder Endlosfasern. Bevorzugt kann in einer Ausführungsform die Anwendung von Glasfasern sein. Geeignete Granulate umfassen beispielsweise anorganische Oxide oder anorganische Silikate wie Calciumsilikat beziehungsweise Wollastonit. Mittlere Partikelgrößen eingesetzter Granulate können zwischen etwa 1µm und etwa 100 µm, oder zwischen etwa 5 und etwa 20 µm betragen (bestimmt nach DIN 66161). Die spezifische Oberfläche nach BET der eingesetzten Granulate kann beispielsweise zwischen etwa 0,1 und etwa 10 m²/g, oder zwischen etwa 0,35 und etwa 3 m²/g liegen.

Die Menge der zugesetzten Füllstoffe unterscheidet sich je nach Anwendung und Art des Fülstoffs. In einer Ausführungsform werden Füllstoffe in Form von Granulaten in einer Menge von zwischen etwa 0,01 und etwa 10 Gew-%, oder von zwischen etwa 2 und etwa 6 Gew.-% gemessen an der Gesamtmasse des eingesetzten, gebrauchten Kunststoffmaterials zugesetzt. Alternativ oder zusätzlich können Füllstoffe in Form von Fasern in einer Menge von zwischen etwa 1 und etwa 8 Gew.-%, beispielsweise zwischen etwa 1 und etwa 4 Gew.-%, oder zwischen etwa 5 und etwa 7 Gew.-% gemessen an der Gesamtmasse des eingesetzten, gebrauchten Kunststoffmaterials zugesetzt werden.

In einer Ausführungsform sind die verwendeten Füllstoffe kompatibilisiert und/oder passiviert. Eine derartige Behandlung des Füllmaterials kann die Verbindung des Füllstoffes mit der Polymermatrix des Kunststoffmaterials verbessern und so auch Einfluss auf die mechanischen Eigenschaften des aufbereiteten Kunststoffmaterials nehmen und/oder eine Phasentrennung während der Aufbereitung und/oder nachgelagerten Bearbeitungsschritten verbessern. Die Kompatibilisierung kann z.B. mit Maleinsäureanhydrid und/oder Acrylsäure und/oder Alkoxysilanen erfolgen.

In einer Ausführungsform umfasst die Aufbereitung aus Schritt (d) die Zugabe wenigstens eines Elastomers. Elastomere können Einfluss auf bestimmte mechanische Eigenschaften wie die Schlagzähigkeit, und insbesondere die Schlagzähigkeit bei niederen Temperaturen nehmen, ohne notwendigerweise andere mechanische Eigenschaften wie die Zugfestigkeit oder das Biegemodul zu beeinflussen. In einer Ausführungsform handelt es sich bei dem zugesetzten Elastomer um ein gummiartiges Polymer, insbesondere Kautschuk. Das Elastomer kann ein Copolymer auf Basis von Butadien und/oder Styrol und/oder Isopren sein. Geeignet sind unter anderem Ethylen-Alpha-Olefin-Copolymere, beispielsweise Ethylen-Okten-Copolymere.

In einer Ausführungsform werden Elastomere in Form kleiner Partikel eingemischt, z.B. solche mit einer durchschnittlichen Teilchengröße von zwischen etwa 1 und etwa 1000 µm aufweisen.

In einer Ausführungsform beträgt der Anteil an zugesetztem Elastomer zwischen etwa 1 etwa 15 Gew.-%, oder zwischen etwa 5 und etwa 10 Gew.-% gemessen an der Gesamtmasse des eingesetzten, gebrauchten Kunststoffmaterials.

In einer Ausführungsform umfasst die Aufbereitung aus Schritt (d) die Zugabe eines Stabilisierungsmittels nach der Zugabe eines Füllstoffs und/oder Elastomers und/oder einer Substanz mit wenigstens einer reaktiven Gruppe, insbesondere nach der Zugabe eines Radikalstarters. So kann beispielsweise eine Wechselwirkung des Stabilisierungsmittels mit der reaktiven Gruppe eines Radikalstarters verhindert werden, was die Effizienz des eingesetzten Peroxides und/oder die stabilisierende Wirkung des Stabilisierungsmittels negativ beeinflussen könnte.

Es kann jedoch auch vorgesehen sein, dass das Stabilisierungsmittel vor oder während der Zugabe eines Füllstoffs und/oder Elastomers und/oder einer Substanz mit wenigstens einer reaktiven Gruppe, insbesondere nach der Zugabe eines Radikalstarters erfolgt. So konnte in manchen Fällen die chemische Aktivität der reaktiven Substanz eingestellt werden, um rheologische Veränderungen besser kontrollieren zu können.

In einer Ausführungsform umfasst die Aufbereitung aus Schritt (d) die gemeinsame Zugabe eines Füllstoffes und/oder eines Elastomers und einer Substanz mit wenigstens einer reaktiven Gruppe. Diese gemeinsame Zugabe kann auch für eine Teilmenge der gesamten zugegebenen Menge des betreffenden Füllstoffes und/oder Elastomers erfolgen, beispielsweise zwischen etwa 30% und etwa 70% oder zwischen etwa 40% und etwa 60%. Diese gemeinsame Zugabe kann die akkurate Dosierung kleiner Mengen der Substanz mit wenigstens einer reaktiven Gruppe begünstigen. Ferner kann Einfluss auf die Aktivität der reaktiven Substanz genommen werden, sodass sich in einigen Fällen die Veränderung der rheologischen Eigenschaften besser kontrollieren lässt.

In einer Ausführungsform umfasst das Verfahren ferner die Zugabe wenigstens eines Farbstoffes, vorzugsweise eines Azofarbstoffes. Die Farbstoffe können in einer Ausführungsform in einer Menge von kleiner etwa 1 Gew.-% gemessen an der Gesamtmasse des eingesetzten, gebrauchten Kunststoffmaterials zugegeben werden.

Weitere Einzelheiten und Vorteile der Erfindung ergeben sich aus den folgenden Figuren und Ausführungsbeispielen. In den Figuren zeigen:
- Figur 1:: eine graphische Darstellung messbarer chemischer Eigenschaften des gebrauchten Kunststoffmaterials,
- Figur 2:: eine schematische Darstellung des Ablaufs eines erfindungsgemäßen Verfahrens in einer Ausführungsform, und
- Figur 3:: eine schematische Darstellung möglicher Schritte der Aufbereitung im Zuge des erfindungsgemäßen Verfahrens.

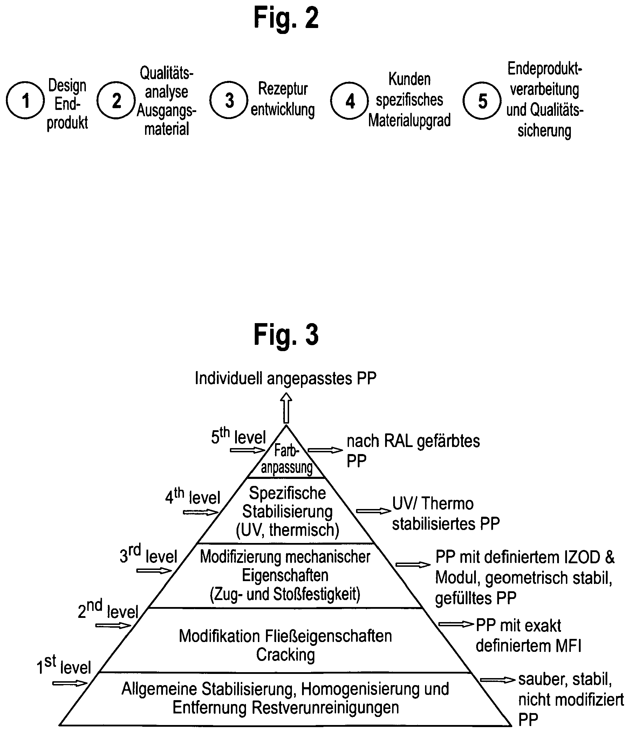

In Figur 2 ist der Ablauf einer Ausführungsform eines erfindungsgemäßen Verfahrens schematisch dargestellt.

Der erste Schritt *"Design Endprodukt"* umfasst die Festlegung des Einsatzbereiches des aufbereiteten Kunststoffmaterials, was mit der Bestimmung physikalischer Eigenschaften einhergeht. Dabei können auch Parameter wie die gewünschte Einsatzdauer oder Verwendung berücksichtigt werden.

Im zweiten Schritt *"Qualitätsanalyse Ausgangsmaterial"* erfolgt eine Bestimmung verschiedener chemischer und physikalischer Ausgangseigenschaften des gebrauchten Kunststoffmaterials.

Auf der Grundlage der Bestimmung der physikalischen Eigenschaften aus dem ersten Schritt und der im zweiten Schritt ermittelten Eigenschaften des Ausgangsmaterials folgt im dritten Schritt *"Rezepturentwicklung"* die Festlegung des Aufbereitungsprozesses, insbesondere die Definition von Art und Menge der chemischen Zusatzstoffe und Füllmaterialien.

Abschließend erfolgt eine Qualitätskontrolle und eine Weiterverarbeitung des Endprodukts in Schritten 4 und 5.

Figur 3 zeigt eine schematische Darstellung möglicher Schritte der Aufbereitung im Zuge des erfindungsgemäßen Verfahrens, und beschreibt makroskopische Eigenschaften, die durch die jeweiligen Schritte beeinflusst werden können.

In diesem Ausführungsbeispiel erfolgt in einem ersten Schritt die Zugabe von Stabilisatoren, um einen weiteren Abbau des gebrauchten Kunststoffmaterials während der Aufbereitung durch im gebrauchten Kunststoffmaterial vorhandene Oxidationsmitteln und andere reaktive Stoffen zu verhindern und die Aktivität der nachfolgend zugegebenen reaktiven Substanz zu regulieren.

In einem zweiten Schritt erfolgt durch die Zugabe von reaktiven Substanzen wie beispielsweise Radikalstartern eine Modifikation der Fließeigenschaften durch vis-breaking.

In einem weiteren Schritt werden Füllstoffe und Elastomere zugegeben, um mechanische Eigenschaften wie die Zugfestigkeit, Schlagfestigkeit, das Biegemodul oder die Zugspannung einzustellen.

Anschließend erfolgt eine weitere Zugabe von Stabilisierungsmitteln, welche darauf abzielt, die physikalischen Eigenschaften des aufbereiteten Kunststoffmaterials während nachgelagerten Verarbeitungsprozessen und dessen anschließender Verwendung konstant zu halten.

Letztlich kann die Zugabe eines Farbstoffs erfolgen.

### Ausführunqsbeispiel 1

In diesem Beispiel wird dem erfindungsgemäßen Verfahren Kunststoffmaterial aus häuslichem Abfall (gelber Sack) zu Grunde gelegt. Dieses besteht hier zu etwa 80% aus Lebensmittelverpackungsmaterial und zu etwa 20% aus Non-Food-Verpackungsmaterial.

Dieses Ausgangsmaterial wird gereinigt, zerkleinert und getrennt. Es folgt eine Extrusion bei gleichzeitiger Schmelzfiltration, wodurch Pellets eines gebrauchten Kunststoffmaterials mit homogenen Eigenschaften entstehen. Diese weisen etwa 98% Polypropylen, 1,5% Polyethylen und 0,5% an weiteren Zusatzstoffen beziehungsweise Verunreinigungen auf. Die physikalischen Eigenschaften des gebrauchten Kunststoffmaterials sind in der Spalte *"Ausgangseigenschaft"* in Tabelle 1 dargestellt.

**Tabelle 1**

| | **Einheit** | **Messmethode** | **Ausgangseigenschaft** |
|---|---|---|---|
| **Rheologische Eigenschaften** | | | |
| Schmelzflussrate | g/10min | ISO 1133 bei 230°C und 2,16 kg Belastung | 11 ± 3 |

| **Mechanische Eigenschaften** | | | |
|---|---|---|---|
| Zugfestigkeit | MPa | ISO 527 | 900 ± 100 |
| Zugspannung (Fließgrenze) | | ISO 527 bei 500 | 26 ± 5 |
| Zugspannung (max) | | mm/min | 26 ± 5 |
| Biegemodul | | ISO 178 | 1050 ± 100 |
| Schlagzähigkeit IZOD bei 23 ± 2°C | kJ/m² | ISO 180/1A | 5.6 ± 1 |
| Schlagzähigkeit IZOD bei -30 ± 2°C | | | 3 ± 1 |
| Schlagzähigkeit Charpy bei 23 ± 2°C | | ISO 179/1A | 4 ± 1 |

| **Thermische Eigenschaften** | | | |
|---|---|---|---|
| Wärmeformbeständigkeit | °C | ISO 75-2 bei 1.8 MPa | 50 ± 3 |

| **Andere Eigenschaften** | | | |
|---|---|---|---|
| Dichte | g/cm³ | ISO 1183 | 0.91 ± 0.05 |
| Aschegehalt | % | 650°C/15min | 1.3 ± 1 |
| Brom | ppm | | < 100 |
| Cadmium | | | < 100 |
| Chrom | | | < 100 |
| Quecksilber | | | < 100 |
| Blei | | | < 100 |

### Ausführunqsbeispiel 2:

Das gebrauchte Kunststoffmaterial aus Ausführungsbeispiel 1 soll nun so aufbereitet werden, dass es zur Herstellung von dünnwandigen Behältnissen wie beispielsweise Kübeln im Spritzgussverfahren geeignet ist. Durch das Spritzgießen von dünnen Wänden ergeben sich einerseits gesteigerte Anforderungen an die Schmelzflussrate. Zum anderen sollen die entstehenden dünnwandigen Artikel eine hohe Zugfestigkeit und ein hohes Biegemodul aufweisen.

Gewünschte physikalische Zieleigenschaften werden in Tabelle 2 dargestellt. Als Referenzmaterial diente SABIC^{®} PP 412MN40, ein PP Block-Copolymer. Dieses Neumaterial wird industriell zur Herstellung von dünnwandigen Artikeln wie z.B. Eimern oder Wannen eingesetzt.

**Tabelle 2**

| | **Einheit** | **Messmethode** | **Zieleigenschaft** |
|---|---|---|---|
| **Rheologische Eigenschaften** | | | |
| Schmelzflussrate | g/10min | ISO 1133 bei 230°C und 2,16 kg | min. 33 |
| | | Belastung | |
| **Mechanische Eigenschaften** | | | |
| Zugfestigkeit | MPa | ISO 527 | min. 1250 |
| Zugspannung (Fließgrenze) | | ISO 527 bei 500 | 27 |
| Zugspannung (max) | | mm/min | 27 |
| Biegemodul | | ISO 178 | min. 1300 |
| Schlagzähigkeit IZOD bei 23 ± 2°C | kJ/m² | ISO 180/1A | min. 3.5 |
| Schlagzähigkeit IZOD bei -30 ± 2°C | | | min. 2.3 |
| Schlagzähigkeit Charpy bei 23 ± 2°C | | ISO 179/1A | min. 4.0 |
| **Thermische Eigenschaften** | | | |
| Wärmeformbeständigkeit | °C | ISO 75-2 bei 1.8 MPa | 48 |
| **Andere Eigenschaften** | | | |
| Dichte | g/cm³ | ISO 1183 | max. 0.93 |
| Aschegehalt | % | 650°C/15min | max. 6 |
| Brom | ppm | | < 100 |
| Cadmium | | | < 100 |
| Chrom | | | < 100 |
| Quecksilber | | | < 100 |
| Blei | | | < 100 |

Das Ausgangsmaterial wird geschmolzen und in einem Extruder durchmischt.

In einem ersten Schritt erfolgt die Zugabe von 0,25% gemessen an der Gesamtmasse des gebrauchten Kunststoffmaterials an Recyclosorb 550. Dieser einen Radikalfänger enthaltende Zusatz ist zur Stabilisierung gegen strahlungsbedingte und oxidative Abbaureaktionen geeignet.

Anschließend werden 0,08% gemessen an der Gesamtmasse des gebrauchten Kunststoffmaterials an Luperox^{®}802PP40 zugegeben, eine 40%ige Formulierung aus 1,4-Di(2-tert-butyl peroxyisopropyl)-benzol in Polypropylen, um durch vis-breaking die Schelzflussrate des Ausgangsmaterials zu verbessern. Dieses Peroxid wird vor dessen Zugabe mit etwa 50 Gew.-% der Gesamtmenge des zugesetzten (und nachfolgend beschriebenen) Füllmaterials vermischt. Das Füllmaterial und das bereits durch vorgelagerte Zugabe in der Schmelze vorhandene Recyclosorb 550 beeinflussen die Wirkung von Luperox^{®}802PP40, wodurch eine bessere Kontrolle des vis-breaking erreicht wird.

Anschließend werden 2 Gew.-% gemessen an der Menge des gebrauchten Kunststoffmaterials FACTOR^{®} PP LGF60 N (PRYLTEX V6060HL 12 Natural) zugegeben, einem Polypropylenpräparat enthaltend 60 Gew.-% oberflächenmodifizierte Glasfasern. Dadurch wird Einfluss auf die Zugfestigkeit und das Biegemodul des aufbereiteten Kunststoffmaterials genommen.

### Ausführunqsbeispiel 3:

Ähnlich dem Ausführungsbeispiel 2 soll das gebrauchte Kunststoffmaterial aus Ausführungsbeispiel 1 so aufbereitet werden, dass es zur Herstellung von dünnwandigen Behältnissen wie beispielsweise Eimern oder Wannen im Spritzgussverfahren geeignet ist.

Der einzige Unterschied besteht in der Art und Menge des Füllmaterials. Hier werden 4 Gew.-% gemessen an der Menge des gebrauchten Kunststoffmaterials an NYGLOS 8 Raw PP zugegeben, einem in einer PP Matrix eingebetteten Wollastonit-Granulatmaterial dessen Oberfläche mit 0,5% Alkoxysilanen behandelt ist.

Art und Menge der Zusatzstoffe in Ausführungsbeispielen 2 und 3 (AB 2 und AB 3) ist in Tabelle 3 zusammengefasst.

**Tabelle 3**

| **Gebrauchtes** | **Zusatzstoffe** | | | | |
|---|---|---|---|---|---|
| **Kunststoffmaterial** | | | | | |
| | Recyclossorb | Luperox | Pryltex | Nyglos 8 | |
| | | 550 | 802PP40 | V6060HL 12 Natural | |
| **AB 2** | 97.67 % | 0.25 % | 0.08 % | 2 % | |
| **AB 3** | 95.67 % | 0.25 % | 0.08 % | | 4 % |

Die erreichten physikalischen Eigenschaften des aufbereiteten Kunststoffmaterials sind in Tabelle 4 dargestellt und zur besseren Übersicht erneut den Ausgangseigenschaften und Zieleigenschaften aus Tabellen 1 und 2 gegenübergestellt. Die Messungen erfolgen analog den Methoden aus Tabelle 1.

**Tabelle 4**

| | **Einheit** | **Ausgangsei genschaft** | **Zieleigenschaft** | **AB 1** | **AB 2** | **Toleran z** |
|---|---|---|---|---|---|---|
| **Rheologische** | | | | | | |
| **Eigenschaften** | | | | | | |
| Schmelzflussrate | g/10min | 11 ± 3 | min. 33 | 33 | 33 | ± 3 |

| **Mechanische** | | | | | | |
|---|---|---|---|---|---|---|
| **Eigenschaften** | | | | | | |
| Zugfestigkeit | MPa | 900 ± 100 | min. 1250 | **1285** | **1420** | ± 100 |
| Zugspannung (Fließgrenze) | | 26 ± 5 | 27 | 27 | 26 | ± 5 |
| Zugspannung (max) | | 26 ± 5 | 27 | 27 | 26 | ± 5 |
| Biegemodul | | 1050 ± 100 | min. 1300 | **1365** | **1418** | ± 100 |
| Schlagzähigkeit IZOD bei 23 ± 2°C | kJ/m² | 5.6 ± 1 | min. 3.5 | 3.5 | 3.9 | ± 1 |
| Schlagzähigkeit IZOD bei -30 ± 2°C | | 3 ± 1 | min. 2.3 | 2.3 | 2.9 | ± 1 |
| Schlagzähigkeit | | 3 ± 1 | min. 4.0 | 4.0 | 4.1 | ± 1 |
| Charpy bei 23 ± 2°C | | | | | | |

| **Thermische** | | | | | | |
|---|---|---|---|---|---|---|
| **Eigenschaften** | | | | | | |
| Wärmeformbestän | °C | 50 ± 3 | 48 | 51.0 | 48.0 | ± 3 |
| digkeit | | | | | | |

| **Andere** | | | | | | |
|---|---|---|---|---|---|---|
| **Eigenschaften** | | | | | | |
| Dichte | g/cm³ | 0.91 ± 0.05 | max. 0.93 | 0.932 | 0.935 | ± 0.05 |
| Aschegehalt | % | 1.3 ± 1 | max. 6 | 2.80 | 5.40 | ± 1 |
| Brom | ppm | < 100 | < 100 | < 100 | < 100 | |
| Cadmium | | < 100 | < 100 | < 100 | < 100 | |
| Chrom | | < 100 | < 100 | < 100 | < 100 | |
| Quecksilber | | < 100 | < 100 | < 100 | < 100 | |
| Blei | | < 100 | < 100 | < 100 | < 100 | |

Wie sich aus den in Tabelle 4 dargestellten Messwerten ergibt, können mit Hilfe des erfindungsgemäßen Verfahrens eine Reihe von zuvor anhand des gewünschten Produkts festgelegte physikalische Eigenschaften eines gebrauchten Kunststoffmaterials (hier: Schmelzflussrate, Zugfestigkeit, Biegemodul) auf den gewünschten Wert eingestellt werden. Andere physikalische Eigenschaften, welche für diese spezifische Anwendung weniger wichtig sind, werden hingegen nicht verändert beziehungsweise es können sogar gewisse Einbußen in Kauf genommen werden.

### Ausführunqsbeispiel 4:

Das gebrauchte Kunststoffmaterial aus Ausführungsbeispiel 1 soll nun so aufbereitet werden, dass es zur Herstellung von Erzeugnissen wie Paletten geeignet ist, die insbesondere eine hohe Schlagzähigkeit aufweisen sollen, auch bei tiefen Temperaturen. Dagegen haben die Zugfestigkeit und das Biegemodul eine untergeordnete Bedeutung.

Gewünschte physikalische Zieleigenschaften werden in Tabelle 5 dargestellt. Als Referenzmaterial diente SABIC^{®} PP PHC27-90, ein PP Block-Copolymer. Dieses Neumaterial wird industriell zur Herstellung von Paletten eingesetzt.

**Tabelle 5**

| | **Einheit** | **Messmethode** | **Zieleigenschaft** |
|---|---|---|---|
| **Rheologische Eigenschaften** | | | |
| Schmelzflussrate | g/10min | ISO 1133 bei 230°C und 2,16 kg | 10 |
| | | Belastung | |

| **Mechanische Eigenschaften** | | | |
|---|---|---|---|
| Zugfestigkeit | MPa | ISO 527 | max. 1000 |
| Zugspannung (Fließgrenze) | | ISO 527 bei 500 | 27 |
| Zugspannung (max) | | mm/min | 27 |
| Biegemodul | | ISO 178 | max. 1100 |
| Schlagzähigkeit IZOD bei 23 ± 2°C | kJ/m² | ISO 180/1A | min. 7.0 |
| Schlagzähigkeit IZOD bei -30 ± 2°C | | | min. 3 |
| Schlagzähigkeit Charpy bei 23 ± 2°C | | ISO 179/1A | min. 7.0 |

| **Thermische Eigenschaften** | | | |
|---|---|---|---|
| Wärmeformbeständigkeit | °C | ISO 75-2 bei 1.8 MPa | 48 |

| **Andere Eigenschaften** | | | |
|---|---|---|---|
| Dichte | g/cm³ | ISO 1183 | max. 0.96 |
| Aschegehalt | % | 650°C/15min | max. 3 |
| Brom | ppm | | < 100 |
| Cadmium | | | < 100 |
| Chrom | | | < 100 |
| Quecksilber | | | < 100 |
| Blei | | | < 100 |

Das Ausgangsmaterial wird geschmolzen und in einem Extruder durchmischt.

In einem ersten Schritt erfolgt analog zu Ausführungsbeispielen 2 und 3 die Zugabe von 0,25% gemessen an der Gesamtmasse des gebrauchten Kunststoffmaterials an Recyclosorb 550. Dieser einen Radikalfänger enthaltende Zusatz ist zur Stabilisierung gegen strahlungsbedingte und oxidative Abbaureaktionen geeignet.

Anschließend werden 8 Gew.-% gemessen an der Menge des gebrauchten Kunststoffmaterials an Exact^{®}8203 zugegeben, einem Ethylen-Octen Co-Polymer. Dieses soll die Schlagzähigkeit erhöhen und die Flexibilität des Materials auch bei tiefen Temperaturen erhöhen.

Art und Menge der Zusatzstoffe in Ausführungsbeispiel 4 (AB 4) ist in Tabelle 6 zusammengefasst.

**Tabelle 6**

| | **Gebrauchtes Kunststoffmaterial** | **Zusatzstoffe** | |
|---|---|---|---|
| | | Recyclossorb 550 | Exact 8203 |
| **AB 4** | 91.75 % | 0.25 % | 8.00% |

Die erreichten physikalischen Eigenschaften des aufbereiteten Kunststoffmaterials sind in Tabelle 7 dargestellt und zur besseren Übersicht erneut den Ausgangseigenschaften und Zieleigenschaften aus Tabellen 1 und 5 gegenübergestellt. Die Messungen erfolgen analog den Methoden aus Tabelle 1.

**Tabelle 7**

| | **Einheit** | **Ausgangseigensch aft** | **Zieleigenschaft** | **AB** 1 | **Toleranz** |
|---|---|---|---|---|---|
| **Rheologische** | | | | | |
| **Eigenschaften** | | | | | |
| Schmelzflussrate | g/10min | 11 ± 3 | 10 | 11 | ± 3 |

| **Mechanische** | | | | | |
|---|---|---|---|---|---|
| **Eigenschaften** | | | | | |
| Zugfestigkeit | MPa | 900 ± 100 | max. 1000 | 1013 | ± 100 |
| Zugspannung (Fließgrenze) | | 26 ± 5 | 27 | 24 | ± 5 |
| Zugspannung (max) | | 26 ± 5 | 27 | 24 | ± 5 |
| Biegemodul | | 1050 ± 100 | Max. 1100 | 1103 | ± 100 |
| Schlagzähigkeit | kJ/m² | 5.6 ± 1 | min. 7.0 | **7.3** | ± 1 |
| IZOD bei 23 ± 2°C | | | | | |
| Schlagzähigkeit | | 3 ± 1 | min. 3 | **3.2** | ± 1 |
| IZOD bei -30 ± 2°C Schlagzähigkeit | | 3 ± 1 | min. 7.0 | **7.0** | ± 1 |
| Charpy bei 23 ± 2°C | | | | | |

| **Thermische** | | | | | |
|---|---|---|---|---|---|
| **Eigenschaften** | | | | | |
| Wärmeformbestän digkeit | °C | 50 ± 3 | 48 | 48.0 ± | 3 |

| **Andere** | | | | | |
|---|---|---|---|---|---|
| **Eigenschaften** | | | | | |
| Dichte | g/cm³ | 0.91 ± 0.05 | max. 0.96 | 0.960 | ± 0.05 |
| Aschegehalt | % | 1.3 ± 1 | max. 3 | | ± 1 |
| Brom | ppm | < 100 | < 100 | < 100 | |
| Cadmium | | < 100 | < 100 | < 100 | |
| Chrom | | < 100 | < 100 | < 100 | |
| Quecksilber | | < 100 | < 100 | < 100 | |
| Blei | | < 100 | < 100 | < 100 | |

### Ausführunqsbeispiel 5:

Das gebrauchte Kunststoffmaterial aus Ausführungsbeispiel 1 soll nun so aufbereitet werden, dass es zur Herstellung von Erzeugnissen wie Kisten geeignet ist, die insbesondere eine hohe Zugfestigkeit und ein hohes Biegemodul aufweisen sollen, um auch unter größeren Belastungen geometrisch Stabil zu bleiben.

Gewünschte physikalische Zieleigenschaften werden in Tabelle 8 dargestellt. Als Referenzmaterial diente SABIC^{®} PP 31, ein PP Block-Copolymer. Dieses Neumaterial wird industriell zur Herstellung von Kisten eingesetzt.

**Tabelle 8**

| | **Einheit** | **Messmethode** | **Zieleigenschaft** |
|---|---|---|---|
| **Rheologische Eigenschaften** | | | |
| Schmelzflussrate | g/10min | ISO 1133 bei 230°C und 2,16 kg Belastung | 10 |

| **Mechanische Eigenschaften** | | | |
|---|---|---|---|
| Zugfestigkeit | MPa | ISO 527 | min. 1400 |
| Zugspannung (Fließgrenze) | | ISO 527 bei 500 | 27 |
| Zugspannung (max) | | mm/min | 27 |
| Biegemodul | | ISO 178 | min. 1400 |
| Schlagzähigkeit IZOD bei 23 ± 2°C | kJ/m² | ISO 180/1A | min. 4.5 |
| Schlagzähigkeit IZOD bei -30 ± 2°C | | | min. 2.0 |
| Schlagzähigkeit Charpy bei 23 ± 2°C | | ISO 179/1A | min. 4.5 |

| **Thermische Eigenschaften** | | | |
|---|---|---|---|
| Wärmeformbeständigkeit | °C | ISO 75-2 bei 1.8 MPa | 48 |

| **Andere Eigenschaften** | | | |
|---|---|---|---|
| Dichte | g/cm³ | ISO 1183 | max. 0.95 |
| Aschegehalt | % | 650°C/15min | max. 3 |
| Brom | ppm | | < 100 |
| Cadmium | | | < 100 |
| Chrom | | | < 100 |
| Quecksilber | | | < 100 |
| Blei | | | < 100 |

Das Ausgangsmaterial wird geschmolzen und in einem Extruder durchmischt.

In einem ersten Schritt erfolgt analog zu Ausführungsbeispielen 2, 3 und 4 die Zugabe von 0,25% gemessen an der Gesamtmasse des gebrauchten Kunststoffmaterials an Recyclosorb 550. Dieser einen Radikalfänger enthaltende Zusatz ist zur Stabilisierung gegen strahlungsbedingte und oxidative Abbaureaktionen geeignet.

Anschließend werden 8 Gew.-% gemessen an der Menge des gebrauchten Kunststoffmaterials an FACTOR^{®} PP LGF60 N (PRYLTEX V6060HL 12 Natural) zugegeben, einem Polypropylenpräparat mit 60 Gew.-% von chemischen oberflächenmodifizierten Glasfasern. Dieses soll Einfluss auf die Zugfestigkeit und das Biegemodul des aufbereiteten Kunststoffmaterials nehmen.

Art und Menge der Zusatzstoffe in Ausführungsbeispiel 5 (AB 5) ist in Tabelle 9 zusammengefasst.

**Tabelle 9**

| | **Gebrauchtes Kunststoffmaterial** | **Zusatzstoffe** | |
|---|---|---|---|
| **AB 4** | 93.75 % | Recyclossorb 550 | Pryltex V6060HL 12 Natural |
| | | 0.25 % | 6.00 % |

Die erreichten physikalischen Eigenschaften des aufbereiteten Kunststoffmaterials sind in Tabelle 10 dargestellt und zur besseren Übersicht erneut den Ausgangseigenschaften und Zieleigenschaften aus Tabellen 1 und 8 gegenübergestellt. Die Messungen erfolgen analog den Methoden aus Tabelle 1.

**Tabelle 10**

| | **Einheit** | **Ausgangseigensch aft** | **Zieleigenschaft** | **AB 1** | **Toleranz** |
|---|---|---|---|---|---|
| **Rheologische** | | | | | |
| **Eigenschaften** | | | | | |
| Schmelzflussrate | g/10min | 11 ± 3 | 10 | 10 | ± 3 |

| **Mechanische** | | | | | |
|---|---|---|---|---|---|
| **Eigenschaften** | | | | | |
| Zugfestigkeit | MPa | 900 ± 100 | min. 1400 | **1462** | ± 100 |
| Zugspannung (Fließgrenze) | | 26 ± 5 | 27 | 29 | ± 5 |
| Zugspannung (max) | | 26 ± 5 | 27 | 29 | ± 5 |
| Biegemodul | | 1050 ± 100 | min. 1400 | **1487** | ± 100 |
| Schlagzähigkeit | kJ/m² | 5.6 ± 1 | min. 4.5 | 5.0 | ± 1 |
| IZOD bei 23 ± 2°C Schlagzähigkeit | | 3 ± 1 | min. 2.0 | 2.0 | ± 1 |
| IZOD bei -30 ± 2°C Schlagzähigkeit | | 3 ± 1 | min. 4.5 | 5.0 | ± 1 |
| Charpy bei 23 ± 2°C | | | | | |

| **Thermische** | | | | | |
|---|---|---|---|---|---|
| **Eigenschaften** | | | | | |
| Wärmeformbestän digkeit | °C | 50 ± 3 | 48 | 53.0 | ± 3 |

| **Andere** | | | | | |
|---|---|---|---|---|---|
| **Eigenschaften** | | | | | |
| Dichte | g/cm³ | 0.91 ± 0.05 | max. 0.95 | 0.910 | ±0.05 |
| Aschegehalt | % | 1.3 ± 1 | max. 3 | 2.00 | ± 1 |
| Brom | ppm | < 100 | < 100 | < 100 | |
| Cadmium | | < 100 | < 100 | < 100 | |
| Chrom | | < 100 | < 100 | < 100 | |
| Quecksilber | | < 100 | < 100 | < 100 | |
| Blei | | < 100 | < 100 | < 100 | |

Wie sich aus den in Tabellen 4, 7 und 10 und dargestellten Messwerten ergibt, können mit Hilfe des erfindungsgemäßen Verfahrens eine Reihe von zuvor anhand des gewünschten Produkts festgelegte physikalische Eigenschaften eines gebrauchten Kunststoffmaterials auf den gewünschten Wert eingestellt werden. Andere physikalische Eigenschaften, welche für diese spezifische Anwendung weniger wichtig sind, werden hingegen nicht verändert beziehungsweise es können sogar gewisse Einbußen in Kauf genommen werden.

## Patentansprüche

1. Verfahren zur Herstellung eines aufbereiteten Kunststoffmaterials aus gebrauchtem Kunststoffmaterial, das aus Haushaltsabfällen, Verpackungsabfällen und/oder industriellen Kunststoffabfällen stammt und mindestens 95 Gew.-% Polypropylen aufweist,
**dadurch gekennzeichnet, dass**
das Verfahren die folgenden Schritte aufweist:
(a) Bestimmung von Art und Gehalt der polymeren Bestandteile des gebrauchten Kunststoffmaterials und Bestimmung von deren chemischen Veränderungen durch spektroskopische Analyse,
(b) Bestimmung der Schmelzflussrate nach ISO 1133(230 °C; 2.16 kg Last),
der Zugfestigkeit nach ISO 527,
des
Biegemoduls
nach ISO 178 und/oder der Schlagzähigkeit nach ISO 180/1a des gebrauchten Kunststoffmaterials,
und
(c) Aufbereitung des gebrauchten Kunststoffmaterials zur Veränderung der Schmelzflussrate, der Zugfestigkeit, des Biegemoduls und/oder der Schlagzähigkeit, wobei
(i) eine Veränderung der Schmelzflussrate durch Zusatz von 0,2 bis 0,5 Gew.-% eines organischen Peroxids herbeigeführt wird;
(iii) eine Veränderung der Zugfestigkeit und/oder des Biegemoduls durch Zusatz von 2 bis 10 Gew.-% eines anorganischen Granulats herbeigeführt wird; und
(iii) eine Veränderung der Schlagzähigkeit durch Zusatz von 5 bis 15 Gew.-% eines Elastomers herbeigeführt wird; und
wobei im Rahmen der Aufbereitung weiterhin 0,1 bis 2 Gew.-% eines Stabilisierungsmittels zugegeben werden, bei dem es sich um ein sterisch gehindertes Phenol oder Amin handelt.

2. Verfahren gemäß Anspruch 1, **dadurch gekennzeichnet, dass** Schritt (a) ferner die Bestimmung von chemischen Eigenschaften wenigstens eines niedermolekularen Bestandteils des gebrauchten Kunststoffmaterials und/oder dessen Gehalt im gebrauchten Kunststoffmaterial umfasst.

3. Verfahren gemäß einem der vorhergehenden Ansprüche, **dadurch gekennzeichnet, dass** das anorganische Granulat und/oder das Elastomer und/oder das organische Peroxid gemeinsam zum gebrauchten Kunststoffmaterial zugegeben werden.

4. Verfahren gemäß einem der vorhergehenden Ansprüche, **dadurch gekennzeichnet, dass** das Stabilisierungsmittel nach dem anorganischen Granulat und/oder dem Elastomer und/oder dem organischen Peroxid zum gebrauchten Kunststoffmaterial zugegeben wird.

5. Verfahren gemäß einem der vorangehenden Ansprüche, **dadurch gekennzeichnet, dass** das Stabilisierungsmittel, das anorganische Granulat, das Elastomer und/oder das organische Peroxid in einem Trägermaterial zum gebrauchten Kunststoffmaterial zugegeben werden, wobei das Trägermaterial ein Kunststoff und vorzugsweise Polypropylen ist.

## Claims

1. A method for producing a processed plastics material from used plastics material originating from domestic waste, packaging waste and/or industrial plastics waste and comprises at least 95 wt.% polypropylene,
**characterised in that**
the method comprises the following steps:
(a) determining the type and content of the polymer constituents of the used plastics material and determining chemical changes to said constituents by spectroscopic analysis,
(b) determining the melt flow rate according to ISO 1133 (230°C; 2.16 kg load), the tensile load according to ISO 527, the flexural modulus according to ISO 178 and/or the impact resistance according to ISO 180/1a of the used plastics material,
and
(c) processing the used plastics material to change the melt flow rate, the tensile strength, the flexural modulus and/or the impact resistance, wherein
(i) the melt flow rate is changed by adding from 0.2 to 0.5 wt.% of an organic peroxide;
(ii) the tensile strength and/or the flexural modulus are changed by adding from 2 to 10 wt.% of an inorganic granular material; and
(iii) the impact resistance is changed by adding from 5 to 15 wt.% of an elastomer; and
wherein, within the scope of the preparation process, 0.1 to 2 wt.% of a stabiliser are added, the stabiliser being a sterically hindered phenol or amine.

2. The method according to claim 1, **characterised in that** step (a) also includes the determination of chemical properties of at least one low-molecular constituent of the used plastics material and/or content of said constituent in the used plastics material.

3. The method according to one of the preceding claims, **characterised in that** the inorganic granular material and/or the elastomer and/or the organic peroxide are added jointly to the used plastics material.

4. The method according to one of the preceding claims, **characterised in that** the stabiliser is added to the used plastics material after the inorganic granular material and/or the elastomer and/or the organic peroxide.

5. The method according to one of the preceding claims, **characterised in that** the stabiliser, the inorganic granular material, the elastomer and/or the organic peroxide are added in a carrier material to the used plastics material, wherein the carrier material is a plastic and preferably is polypropylene.

## Revendications

1. Procédé de fabrication d'un matériau en matière plastique préparé à partir d'un matériau en matière plastique usagé, qui provient de déchets ménagers, de déchets d'emballage et/ou de déchets industriels en matière plastique et présente au moins 95 % en poids de polypropylène,
**caractérisé en ce que**
le procédé présente les étapes suivantes :
(a) de définition du type et de la teneur des constituants polymères du matériau en matière plastique usagé et de définition de leurs modifications chimiques par une analyse spectroscopique,
(b) de définition de l'indice de fluidité à chaud selon la norme ISO 1133 (230 °C ; charge 2,16 kg), de la résistance à la traction selon la norme ISO 527, du module de flexion selon la norme ISO 178 et/ou de la résilience selon la norme ISO 180/1a du matériau en matière plastique usagé,
et
(c) de préparation du matériau en matière plastique usagé pour modifier l'indice de fluidité à chaud, la résistance à la traction, le module de flexion et/ou la résilience, dans lequel
(i) une modification de l'indice de fluidité à chaud est provoquée par l'ajout de 0,2 à 0,5 % en poids d'un peroxyde organique ;
(ii) une modification de la résistance à la traction et/ou du module de flexion est provoquée par l'ajout de 2 à 10 % en poids d'un granulat inorganique ; et
(iii) une modification de la résilience est provoquée par l'ajout de 5 à 15 % en poids d'un élastomère ; et
dans lequel par ailleurs 0,1 à 2 % en poids d'un agent stabilisant sont ajoutés dans le cadre de la préparation, lequel est un phénol ou une amine stériquement encombré ou encombrée.

2. Procédé selon la revendication 1, **caractérisé en ce que** l'étape (a) comprend en outre la définition de propriétés chimiques d'au moins un constituant à faible poids moléculaire du matériau en matière plastique usagé et/ou de son teneur dans le matériau en matière plastique usagé.

3. Procédé selon l'une quelconque des revendications précédentes, **caractérisé en ce que** le granulat inorganique et/ou l'élastomère et/ou le peroxyde organique sont ajoutés conjointement au matériau en matière plastique usagé.

4. Procédé selon l'une quelconque des revendications précédentes, **caractérisé en ce que** l'agent stabilisant est ajouté au matériau en matière plastique usagé après le granulat inorganique et/ou l'élastomère et/ou le peroxyde organique.

5. Procédé selon l'une quelconque des revendications précédentes, **caractérisé en ce que** l'agent stabilisant, le granulat inorganique, l'élastomère et/ou le peroxyde organique sont ajoutés dans un matériau de support au matériau en matière plastique usagé, dans lequel le matériau de support est une matière plastique et de préférence du polypropylène.
